# EUROPEAN PATENT APPLICATION

(11) **EP 1 182 594 A1**
(43) Date of publication of application: **27.02.2002**
(21) Application number: 00810744.3
(22) Date of filing: 22.08.2000
(51) Int. Cl.: G06F 17/60

(54) **Method and system for placing a purchase order via a cellular network using the short message system**

(71) Applicant: Rixxo AG, 6343 Rotkreuz (CH)
(72) Inventor: Martignoni, Stephane, 8008 Zürich (CH); Spierings, Robbert, 8706 Meilen (CH); Käser, Reto, 8965 Berikon (CH)
(74) Representative: Wagner, Wolfgang, Dr. Phil., Dipl.-Phys.

(57) **Abstract**

An order is placed by a purchaser using a mobile station (2), in particular a cellular telephone in a cellular network and received by a server system (1). Included in the offer is a description of the item, its price and optionally a code. The purchaser can then opt to reply to the SMS containing the offer. If the offer contains a code, then the purchaser must include the code in the reply as a simple form of validation. The CLI of the originating SMS is used to identify the client for retrieving previously recorded client information like name of purchaser, payment information and shipping information. The server system (1) generates a purchase order to process purchase of the item in accordance with the retrieved client information.

## Description

### Field of the invention

The Short Message Service (SMS) allows alphanumerical messages of up to 160 7-bit ASCII characters to be transmitted to or from a subscriber via a cellular network. In the mobile terminal case the message is typically displayed on the mobile terminal upon reception. On the mobile terminal the last received message can be stored in non-volatile memory. The SMS provides procedures for receiving, reading, editing, clearing, storing and sending messages. The network ensures resending of the SMS message in case of transmission failure once the mobile terminal is reachable again.

### Prior art

US-A-5 692 032 discloses a method for transmitting a SMS message from a network to the cellular terminal, presenting it to a user, determining if the presented message requires a manual acknowledgement and determining if the user's single key depression is the correct manual acknowledgement. However, the document does not in any way teach or suggest a process by which a user might purchase an item.

### Summary of the invention

It is the object of the invention to provide a simple (single SMS) method for enabling a client in a cellular network to purchase an item offered to the client by a previous SMS message.

The present invention provides a client or subscriber in a cellular network with a mechanism for purchasing items using a very simple mechanism. The client can reply to an SMS offer with a single SMS to complete the purchase of an item. A method for this simple purchasing mechanism includes the following steps: (a) transmission of a SMS message from the network to the cellular telephone containing the offer; (b) the transmission of the response from the cellular phone to the network containing nothing (empty SMS) or an optional code to indicate the purchase intention.

### Brief description of the drawings

The invention will be better understood when read in conjunction with the attached drawings where
- Fig. 1: is a message flow diagram illustrating the messages utilised in the embodiment of the present invention to purchase an item using a single SMS response mechanism and
- Fig. 2: illustrates the method according to the invention.

### Description of the preferred embodiments

The embodiments of the invention described herein are implemented as sequential operations using SMS messages. In the system of the present invention, SMS is used to purchase items offered via SMS.

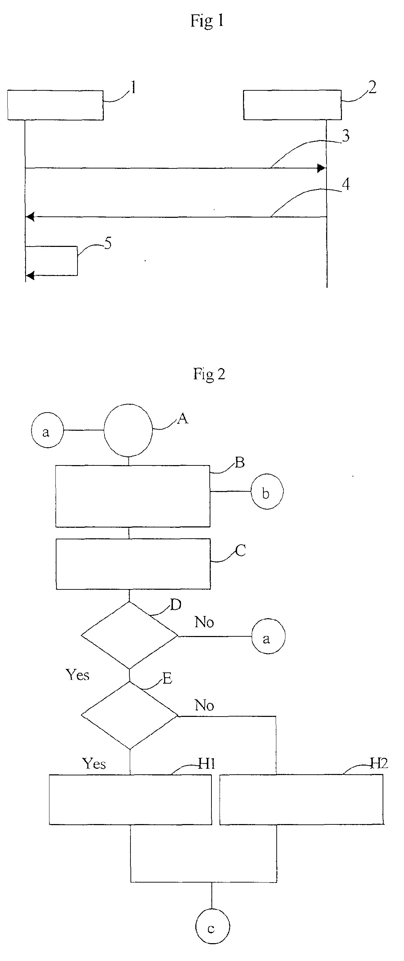

Fig. 1 is a message flow diagram illustrating the message utilisation in the preferred embodiment of the present invention to purchase items using a single reply SMS. The SMS messages are sent between a mobile station 2, a base station (not shown) and a server system 1, all of which are known in the art. The server system 1 contains previously recorded information about the client, which will be used to complete the purchase order.

The purchase process starts with the server system sending a SMS message 3 containing an offer including a description of the item on offer. The client replies 4 to the message optionally including a verification code. The message is sent back to the server system. The server system combines the previously stored information about the user who is identified by the CLI (caller identification) contained in the message with the information about the item to complete the purchase order 5. The flow diagram illustrates the process for purchasing a single item. The process can be repeated as many times as necessary for purchasing several items.

Fig. 2 illustrates a method in accordance with this invention. At block A the mobile station 2 is assumed to be in an idle state. The idle state is independent of whether the client is actively transmitting voice/data to the base station. At block B the mobile station receives a SMS message from the network that contains the offer to purchase an item. At block C the content of the SMS message is presented to the client with an indication of an action required for the item to be ordered. This action may consist in pressing a key or typing a code. At block D a determination is made by the client if a reply to the received SMS message is to be sent. If No, control passes to block A which is the idle state of the mobile station. If Yes, control passes to block E. At block E a determination is made by the client whether a reply with or without a code is necessary. The control passes to block H1 or to block H2, respectively. An SMS message containing or not containing a code is sent back to the server system 1 acknowledging the user's intent to purchase the item c.

## Claims

1. A method for offering an item to a client via a network and allowing for purchasing of the item by the said client, **characterized in that**
- information identifying the item is transmitted via the network and displayed on a mobile station (2) of the client's allowing for an order to be placed by sending a single SMS order message from the said mobile station to a server system (1) of the network, the client being identified to the server system (1) by an identifier contained in the message,
- the server system (1) upon receiving an order message retrieves previously stored additional information about the client using the identifier and
- eventually generates a purchase order while using the retrieved additional information, thereby completing purchase of the item by the client.

2. A method according to claim 1, **characterized in that** with the information identifying the item an indication of a single action that is to be performed to order the identified item is displayed on the mobile station (2).

3. A method according to claim 1 or 2, **characterized in that** the identifier is generated without an action of the client's being required.

4. A method according to claim 3, **characterized in that** the CLI is used as the identifier.

5. A method according to one of claims 1 to 4, **characterized in that** the mobile station (2) is a cellular telephone.
